# EUROPÄISCHE PATENTSCHRIFT

(11) **EP 1 623 616 B1**
(45) Veröffentlichungstag und Bekanntmachung des Hinweises auf die Patenterteilung: **14.01.2009**
(21) Anmeldenummer: 05016648.7
(22) Anmeldetag: 01.08.2005
(51) Int. Cl.: A01B 59/042, A01B 69/00

(54) **Gezogenes landwirtschaftliches Bodenbearbeitungsgerät**
Towed agricultural soil working implement
Remorque pour outil agricole de travail du sol

(30) Priorität: 07.08.2004 DE 102004038444
(43) Veröffentlichungstag der Anmeldung: 08.02.2006
(73) Patentinhaber: Amazonen-Werke H. Dreyer GmbH & Co. KG, 49205 Hasbergen (DE)
(72) Erfinder: Pokriefke, Michael, 27798 Hude (DE)

(56) Entgegenhaltungen:
- EP-A- 0 492 620
- BE-A- 504 737
- DE-A1- 19 809 111
- DE-B- 1 090 893
- FR-A- 2 351 560
- FR-A- 2 399 197
- FR-A- 2 641 234
- NL-C- 1 018 526
- US-A- 2 816 777
- US-A- 4 360 216
- US-A- 5 236 214

## Beschreibung

Die Erfindung betrifft ein gezogenes landwirtschaftliches Bodenbearbeitungsgerät gemäß des Oberbegriffes des Patentanspruches 1.

Derartige Bodenbearbeitungsgeräte (siehe z.B. DE-B-1090893) sind in vielfacher Weise in der Landwirtschaft bekannt. Insbesondere wenn diese Geräte eine große Arbeitsbreite bzw. Baulänge aufweisen, ist es schwierig diese auszuhebeln bzw. einen gewünschten Nachlauf des Bodenbearbeitungsgerätes beim Wenden am Feldende oder bei Kurvenfahrt zu erreichen. Insbesondere wenn derartige Geräte in das Zugmaul oder den Zughaken eines Ackerschleppers eingehängt werden, müssen die Bodenbearbeitungsgeräte in einen separaten Rahmen gegenüber dem Zugrahmen aufgehängt werden, um diese ausheben zu können.

Der Erfindung liegt die Aufgabe zugrunde, in einfacher Weise hier Abhilfe zu schaffen.

Diese Aufgabe wird erfindungsgemäß durch die kennzeichnenden Merkmale des Patentanspruches 1 gelöst. Infolge dieser Maßnahmen wird eine einfache Lenkmöglichkeit des gezogenen Bodenbearbeitungsgerätes gegenüber dem ziehenden Zugfahrzeug erreicht, um den gewünschten spurtreuen Nachlauf zu erreichen. In einfacher Weise wird der spurtreuen Nachlauf so wie das Ausheben durch eine kombinierte Knicklenkdeichsel erreicht, die sich dadurch auszeichnet, dass die Deichsel eine obere mittlere Streben und zwei untere als doppeltwirkende Hydraulikzylinder ausgebildete Streben aufweist. Hierdurch kann je nach Beaufschlagung der Hydraulikzylinder das Bodenbearbeitungsgerät durch Abknicken der Deichsel gegenüber dem Zugrahmen angehoben oder abgesenkt werden oder ein entsprechendes Lenkverhalten bzw.

Nachlaufverhalten des Bodenbearbeitungsgerätes erreicht werden.

Eine vorteilhafte Betätigung der Hydraulikzylinder lässt sich dadurch erreichen, dass die beiden unteren doppeltwirkenden Hydraulikzylinder derart über Hydraulikventile mit Druck beaufschlagbar sind, dass sie gemeinsam oder unabhängig voneinander und/oder in entgegengesetzter Richtung mit Druck beaufschlagbar sind. Werden die Hydraulikzylinder gemeinsam in gleicher Weise beaufschlagt, so wirkt die Deichsel als Knickdeichsel, so dass die Bodenbearbeitungswerkzeuge auf der der Deichsel zugewandten Seite angehoben oder abgesenkt werden. Werden die Hydraulikzylinder unterschiedlich, also in entgegengesetzter Richtung mit Druck beaufschlagt, wirkt die Deichsel als Lenkdeichsel.

Eine einfache Anlenkung der Strebe an dem Zugrahmen wird dadurch erreicht, dass die obere mittlere Streben und die beiden unteren seitlichen Streben auf ihrer hinteren Seite mittels Universalgelenken am Rahmen angelenkt sind.

Ein vorteilhaftes Fahr- und Nachlaufverhalten des Bodenbearbeitungsgerätes lässt sich dadurch erreichen, dass die der Zugdeichsel zugeordneten Stellelemente derartig betätigbar sind, dass in Arbeitsstellung des Bodenbearbeitungsgerätes die Stellelemente für die Zugdeichsel auf Geradeausfahrt gestellt und entsprechend verriegelt und nur in Transport- oder Vorgewendestellung die Stellelemente der Lenkelemente betätigbar sind.

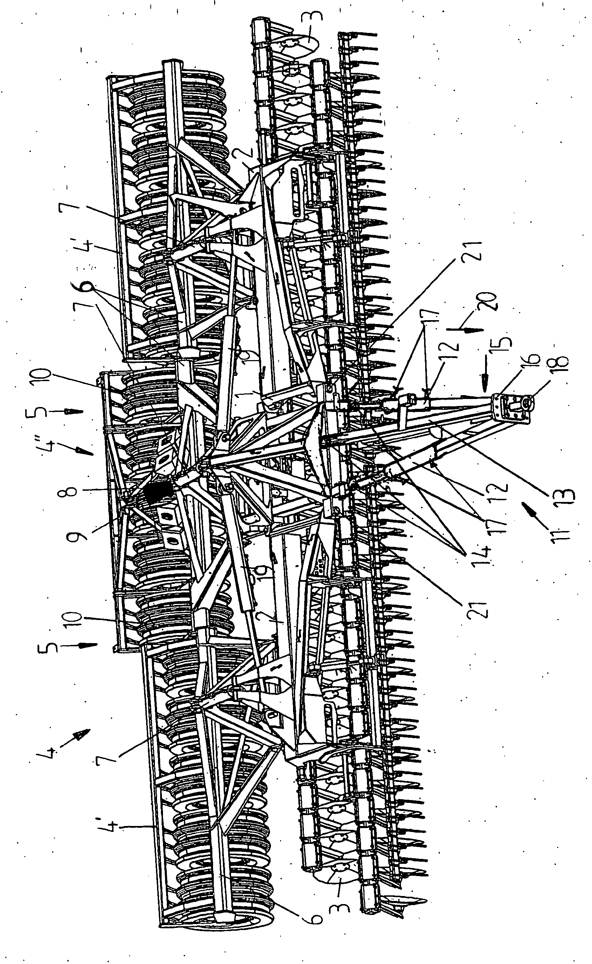

Weitere Einzelheiten der Erfindung sind den übrigen Unteransprüchen, der Beispielsbeschreibung und der Zeichnung zu entnehmen. Die Zeichnung zeigt in perspektivischer Darstellung ein gezogenes Bodenbearbeitungsgerät.

Das landwirtschaftliche Bodenbearbeitungsgerät weist den Zentralrahmen 1 auf, an dem die beiden Seitenrahmen 2 mit Bodenbearbeitungswerkzeugen 3 und Nachlaufwalzen 4 angeordnet sind. Die Bodenbearbeitungswerkzeuge 3 sind in zwei Seitenrahmen 2 geteilt, während die Nachlaufwalzen 4 in drei Teile geteilt ist. Die beiden seitlichen Teile 4' der Nachlaufwalzen 4 sind den Seitenrahmen 2 zugeordnet, während der mittlere Teil 4" der Nachlaufwalzen 4, der gleichzeitig das Fahrwerk 5 des gezogenen landwirtschaftlichen Bodenbearbeitungsgerätes beinhaltet, an den Zentralrahmen 1 angeordnet ist. Zwischen den Seitenrahmen 2 bzw. dem Zentralrahmen 1 und dem Rahmen 6 der Nachlaufwalzen 4 sind die Hydraulikzylinder 7, mittels welcher die Arbeitstiefe der Werkzeuge 3 einstellbar ist, angeordnet. Zwischen dem Rahmen 6 des mittleren Teils 7'' der Nachlaufwalzen 4 und dem mittleren Rahmenteil 6' des mittleren Teils 4" der Walze ist ein weiterer Hydraulikzylinder 8 angeordnet, mittels welcher der mittlere Bereich 9 der Nachlaufwalze 4'' zum Transport hochgezogen wird, so dass nur noch die beiden seitlichen Walzenelemente 10 des mittleren Nachlaufwalzenteils 4'' auf dem Boden aufstehen und das Fahrwerk 5 des Bodenbearbeitungsgerätes bildet.

An der Vorderseite des Zentralrahmens 1 ist die Zugdeichsel 11 angeordnet. Die Zugdeichsel 11 besteht aus den beiden unteren als Hydraulikzylinder ausgebildeten Streben 12 und der oberen mittleren Strebe 13. Die Hydraulikzylinder 12 und die obere mittlere Strebe 13 sind am Zentralrahmen 1 mittels Universalgelenke 14 bzw. Kugelgelenke befestigt. Im vorderen Bereich 15 sind die unteren 12 und oberen Streben 13 mit einem einer geringen Ausweichbewegung zulassenden Gelenk oder fest an der Zwischenplatte 16, angeordnet, wenn die Streben 12, 13 aufgrund ihrer Eigenelastizität ein begrenztes Verschwenken und Längenänderung der Streben 12, 13 und der hieraus folgenden Bewegung zueinander erlauben.

Die als Hydraulikzylinder 12 ausgebildeten unteren Streben sind als doppeltwirkende Hydraulikzylinder ausgebildet und über entsprechende Leitungen 17 mit einer Hydraulikanlage, beispielsweise mit der das Bodenbearbeitungsgerät ziehenden Schleppers verbunden. An den vorderen Enden 15 der Streben 12 und 13 ist über eine Zwischenplatte 16 die Zugöse 18 angeordnet.

Wenn die Hydraulikzylinder 12 über die Hydraulikanlage und entsprechende Stellelemente derart mit Druck beaufschlagt werden, dass sie gleichzeitig aus- bzw. einfahren, wird bei dem Einfahren der Hydraulikzylinder 12 das Bodenbearbeitungsgerät angehoben und bei dem Ausfahren der Hydraulikzylinder 12 das Bodenbearbeitungsgerät abgesenkt.

Wenn die beiden Hydraulikzylinder 12 entgegengesetzt mit Druck beaufschlagt werden, d.h. dass der eine Hydraulikzylinder 12 ausfährt und der andere Hydraulikzylinder 12 einfährt, so wirkt die Zugdeichsel 11 als Lenkdeichsel, so dass ein gewünschter spurtreuer Nachlauf des Bodenbearbeitungsgerätes zu dem ziehenden Schlepper erreicht wird.

Mittels der zwischen dem Zentralrahmen 1 und dem Seitenrahmen 2 angeordneten Hydraulikzylinder 19 können die Seitenrahmen 2 mit den Bodenbearbeitungswerkzeuge 3 und den Nachlaufwalzen 4' um in Fahrtrichtung 20 verlaufende Achsen 21 eingeklappt werden, so dass die Seitenrahmen 2 mit den daran angeordneten Bodenbearbeitungswerkzeugen 3 und Nachlaufwalzen 4' senkrecht gestellt werden. Gleichzeitig wird über den zwischen dem Zentralrahmen 1 und dem mittleren Walzenrahmen 6' angeordneten Hydraulikzylinder 7 die Nachlaufwalze 4'im mittleren Bereich abgesenkt und gleichzeitig die mittleren Teile 9 der mittleren Nachlaufwalze 4' über den Hydraulikzylinder 8 angehoben, so dass nur noch die beiden äußeren Walzenelemente 10 der mittleren Nachlaufwalze 4' auf dem Boden aufstehen und als Fahrwerk 5 dienen.

Die der Zugdeichsel 11 zugeordneten Stellelemente 12 können derart über eine Stelleinrichtung betätigt werden, dass in Arbeitsstellung des Bodenbearbeitungsgerätes, wie in der Zeichnung dargestellt, d.h. die doppeltwirkenden Hydraulikzylinder 12 der unteren Streben für die Zugdeichsel 11 und/oder das Fahrwerk auf Geradeausfahrt gestellt sein und entsprechend verriegelt sein und nur in Transport- oder Vorgewendestellung, d.h. wenn das Bodenbearbeitungsgerät bzw. die Werkzeuge 3 ausgehoben sind, die Stellelemente der Lenkelemente über die Stelleinrichtung betätigbar sein, so dass ein spurgetreuer Nachlauf erreicht wird.

In nicht dargestellter Weise kann auch eine lenkbare Anordnung des mittleren Teils 4' der Nachlaufwalze 4 an den Zentralrahmen 1 vorgesehen sein. Hierbei kann das Fahrwerk mit einer Achsschenkel- oder einer Drehschemellenkung an entsprechenden Rahmenteilen angeordnet sein.

## Patentansprüche

1. Gezogenes landwirtschaftliches Bodenbearbeitungsgerät mit einem Rahmen, einer Zugdeichsel, am Rahmen angeordneten Bodenbearbeitungswerkzeugen und einem Fahrwerk, **dadurch gekennzeichnet, dass** die Zugdeichsel um eine aufrechte Achse zum Lenken des Bodenbearbeitungsgerätes schwenkbar am Rahmen angeordnet sind, dass zwischen dem Rahmen (1) einerseits und der Zugdeichsel (11) andererseits motorische Stellelemente (12) angeordnet sind, dass die Deichsel (11) eine obere mittlere Strebe (13) und zwei untere als doppeltwirkende Hydraulikzylinder ausgebildete Streben (12) aufweist, dass die beiden unteren doppeltwirkenden Hydraulikzylinder (12) derart über Hydraulikventile mit Druck beaufschlagbar sind, dass sie gemeinsam oder unabhängig voneinander und/oder in entgegengesetzter Richtung mit Druck beaufschlagbar sind.

2. Bodenbearbeitungsgerät nach Anspruch 1, **dadurch gekennzeichnet, dass** das Fahrwerk eine Drehschemellenkung aufweist.

3. Bodenbearbeitungsgerät nach Anspruch 1, **dadurch gekennzeichnet, dass** das Fahrwerk eine Achsschenkellenkung aufweist.

4. Bodenbearbeitungsgerät nach Anspruch 4, **dadurch gekennzeichnet, dass** die obere mittlere Streben (13) und die beiden unteren seitlichen Streben (12) auf ihrer hinteren Seite mittels Universalgelenken (14) am Rahmen (1) angelenkt sind.

5. Bodenbearbeitungsgerät nach Anspruch 5, **dadurch gekennzeichnet, dass** das Universalgelenk (14) als Kugelgelenk ausgebildet ist.

6. Bodenbearbeitungsgerät nach Anspruch 1, **dadurch gekennzeichnet, dass** das Fahrwerk Bestandteil einer am Rahmen angeordneten Nachlaufwalze ist.

7. Bodenbearbeitungsgerät nach einem oder mehreren der vorstehenden Ansprüche, **dadurch gekennzeichnet, dass** die der Zugdeichsel (11) zugeordneten Stellelemente (12) derartig betätigbar sind, dass in Arbeitsstellung des Bodenbearbeitungsgerätes die Stellelemente (12) für die Zugdeichsel (11) auf Geradeausfahrt gestellt und entsprechend verriegelt und nur in Transport- oder Vorgewendestellung die Stellelemente (12) der Lenkelemente betätigbar sind.

## Claims

1. A ground cultivating apparatus which can be towed comprising a frame (1), a drawbar (11), ground tilling tools (3) disposed on the frame and a framework, **characterised in that** the drawbar is disposed on the frame so as to be pivotable about a vertical axis for steering the ground cultivating device , **in that** motor-driven adjusting elements (12) are disposed between the frame (1) and the drawbar (11), **in that** the drawbar (11) includes an upper central strut (13) and two lower struts (12) in the form of double-acting hydraulic cylinders, **in that** the two lower double-acting hydraulic cylinders (12) can be impinged upon with pressure by means of hydraulic valves in such a manner that they can be impinged upon with pressure in common or independently of each other and/or in an opposite direction.

2. The ground cultivating apparatus according to claim 1, **characterised in that** the framework includes a pivoted bogie steering mechanism.

3. The ground cultivating apparatus according to claim 1, **characterised in that** the framework includes a double-pivot steering mechanism.

4. The ground cultivating apparatus according to claim 4, **characterised in that** the upper central strut (13) and the two lower lateral struts (12) are pivotally mounted on the frame (1) on their rear side by means of universal pivot joints (14).

5. The ground cultivating apparatus according to claim 5, **characterised in that** the universal pivot joint (14) is in the form of a ball-and-socket joint.

6. The ground cultivating apparatus according to claim 1, **characterised in that** the framework is a component of a trailing roller disposed on the frame.

7. The ground cultivating apparatus according to one or more of the preceding claims, **characterised in that** the adjusting elements (12) associated with the drawbar (11) are actuatable in such a manner that with the ground cultivating device in the operating position, the adjusting elements (12) for the drawbar (11) are adjusted to straight-line travel and are locked correspondingly and the adjusting elements (12) of the steering elements are actuatable only in the transport or turning position.

## Revendications

1. Machine agricole de travail du sol, tractée, comportant un cadre, un timon, des outils pour le travail du sol montés sur le cadre ainsi qu'un châssis,
**caractérisée en ce que**
le timon est monté sur le cadre de façon pivotante autour d'un axe vertical pour diriger la machine,
des éléments d'actionnement à moteur (12) sont installés entre, d'une part, le cadre (1) et d'autre part, le timon (11),
le timon (11) comporte une entretoise centrale supérieure (13) et deux entretoises inférieures (12), réalisées chacune sous la forme d'un vérin hydraulique à double effet,
les deux vérins hydrauliques (12) inférieurs à double effet reçoivent la pression par des vannes hydrauliques de façon à recevoir la pression en commun ou indépendamment l'un de l'autre et/ou dans un sens opposé.

2. Machine pour le travail du sol selon la revendication 1,
**caractérisée en ce que**
le châssis comporte une direction à selle orientable.

3. Machine pour le travail du sol selon la revendication 1,
**caractérisée en ce que**
le châssis comporte une direction à fusée.

4. Machine pour le travail du sol selon la revendication 3,
**caractérisée en ce que**
l'entretoise centrale supérieure (13) et les deux entretoises latérales inférieures (12) sont articulées au cadre (1) sur leur côté arrière par l'intermédiaire d'articulations universelles (14).

5. Machine pour le travail du sol selon la revendication 4,
**caractérisée en ce que**
l'articulation universelle (14) est une articulation à rotule.

6. Machine pour le travail du sol selon la revendication 1,
**caractérisée en ce que**
le châssis fait partie du cylindre suiveur porté par le cadre.

7. Machine pour le travail du sol selon une ou plusieurs des revendications précédentes,
**caractérisée en ce que**
les éléments d'actionnement (12) associés au timon (11) sont commandés de façon qu'en position de travail de la machine pour le travail du sol, les éléments d'actionnement (12) sont réglés par rapport au timon (11) pour un déplacement en ligne droite et sont verrouillés de manière correspondante, et les éléments d'actionnement (12) des éléments de direction sont actionnés seulement en position de transport ou de manoeuvre.
